# EUROPÄISCHE PATENTANMELDUNG

(11) **EP 2 360 447 A1**
(43) Veröffentlichungstag der Anmeldung: **24.08.2011**
(21) Anmeldenummer: 11150930.3
(22) Anmeldetag: 14.01.2011
(51) Int. Cl.: G01B 21/28, G01B 21/30, B23P 9/00, B24C 1/10, C21D 7/06, G06T 7/60

(54) **Verfahren zum Erfassen der Flächenbedeckung beim Kugelstrahlen**

(30) Priorität: 27.01.2010 DE 102010001286
(71) Anmelder: Rolls-Royce Deutschland Ltd & Co KG, 15827 Blankenfelde-Mahlow (DE)
(72) Erfinder: Feldmann, Goetz G., 61440 Oberursel (DE); Hennig, Wolfgang, 56337 Simmern (DE)

(57) **Zusammenfassung**

Bei einem Verfahren zur Ermittlung der beim Kugelstrahlen erzielten Flächenbedeckung zur Gewährleistung einer möglichst gleichmäßigen und vollständigen Verfestigung der Oberfläche von Bauteilen, insbesondere Bliskschaufeln, wird die Oberflächentopographie einer bestimmten Referenzfläche eines kugelbestrahlten Bauteils mit einer optischen digitalen Aufnahmeeinheit digitalisiert und mit Hilfe einer Mess- und Auswerte-Software ein dreidimensionales Höhenprofil erstellt, das kugelstrahlbedingte Eindrücke und Aufwürfe sowie durch die Herstellung des Bauteils bedingte Rauheiten, die kleiner als die Aufwürfe und Eindrücke sind, umfasst. Die fertigungsbedingten Rauheiten werden anschließend durch einen Software-Filter mittels mathematischer Methoden aus dem Höhenbild herausgefiltert. Es wird ein Höhendiagramm mit den unterhalb einer Nulllinie liegenden Eindrücken ermittelt, deren Größe im Verhältnis zur Gesamtfläche im Höhendiagramm errechnet und daraus der Überdeckungsgrad der gesamten kugelgestrahlten Oberfläche bestimmt.

## Beschreibung

### Beschreibung

Die Erfindung betrifft ein Verfahren zum Erfassen der Flächenbedeckung beim Kugelstrahlen zur Verfestigung der Oberfläche von Bauteilen, insbesondere Bliskschaufeln.

Beim Kugelstrahlen werden Strahlmittelkugeln mit hoher Geschwindigkeit gegen die Oberfläche eines Werkstücks geschleudert. Dabei werden in die Oberfläche des Werkstücks Druckeigenspannungen eingebracht und mithin eine Verfestigung der Oberfläche bewirkt, so dass die Rissanfälligkeit verringert wird. Ein wichtiges Bewertungskriterium für die Effektivität des Kugelstrahlens und die Qualität der Oberflächenverfestigung ist die Flächenbedeckung oder Überdeckung des Bauteils beim Kugelstrahlen, das heißt das Verhältnis zwischen der von den Strahlpartikeln getroffenen Fläche zu der bearbeiteten Fläche. Durch eine möglichst vollständige Flächenbedeckung können die Eigenschaften des Bauteils optimal verbessert werden. Andererseits kann ein Überstrahlen der Werkstückoberfläche zu einer Schädigung des Bauteils führen. Die Beurteilung des Überdeckungsgrades erfolgt bekanntermaßen visuell, und zwar durch Betrachten der bestrahlten Fläche mit einer Vergrößerungslupe zur Ermittlung von verformten und nicht verformten Bereichen, oder indem die mit einer fluoreszierenden Lackschicht bedeckte und anschließend gestrahlte Fläche unter UV-Licht betrachtet und dabei visuell dunkle (gestrahlte) und helle (nicht gestrahlte) Bereiche unterschieden werden können. Die visuelle Beurteilung wird durch nicht einheitliche Bearbeitungszustände bei der Fertigung des Bauteil (Drehen, Fräsen, Schleifen, Ätzen) und durch unterschiedliche Prozessparameter bei der Kugelstrahlverfestigung (Härte, Größe, Auftreffwinkel, Druck des Strahlmittels, Härte des Werkstücks) erschwert und erfordert ein hohes Maß an Erfahrung. Das visuelle Prüfverfahren unterliegt somit stark subjektiven Einflüssen und ist daher ungenau. Weitere Nachteile sind die schwierige Reproduzierbarkeit und die eingeschränkte Dokumentierbarkeit des Überdeckungsgrades.

Der Erfindung liegt die Aufgabe zugrunde, ein Verfahren zum Erfassen der Flächenbedeckung beim Kugelstrahlen anzugeben, das eine exakte sowie reproduzierbare und dokumentierbare Bestimmung des Überdeckungsgrades kugelgestrahlter Oberflächen gewährleistet.

Erfindungsgemäß wird die Aufgabe mit einem Verfahren gemäß den Merkmalen des Patentanspruchs 1 gelöst. Zweckmä-βige Weiterbildungen der Erfindung sind Gegenstand der Unteransprüche.

Bei einem Verfahren zur Ermittlung der beim Kugelstrahlen erzielten Flächenbedeckung zur Gewährleistung einer möglichst gleichmäßigen und vollständigen Verfestigung der Oberfläche von Bauteilen, insbesondere Bliskschaufeln, besteht der Kern der Erfindung darin, dass die Oberflächentopographie einer bestimmte Referenzfläche eines kugelbestrahlten Bauteils mit einer optischen digitalen Aufnahmeeinheit digitalisiert wird und mit Hilfe einer Mess- und Auswerte-Software ein dreidimensionales Höhenbild (Höhenprofil) erstellt wird, das kugelstrahlbedingte Eindrücke und Aufwürfe sowie durch die Herstellung des Bauteils bedingte Rauheiten, die kleiner als die Aufwürfe und Eindrücke sind, umfasst; und die fertigungsbedingten Rauheiten anschließend durch einen Software-Filter mittels mathematischer Methoden aus dem Höhenbild herausgefiltert werden sowie ein Höhendiagramm mit den unterhalb einer Nulllinie liegenden Eindrücken ermittelt wird, deren Größe im Verhältnis zu den nicht eingeformten Bereichen des Höhendiagramms errechnet und daraus der Überdeckungsgrad der gesamten kugelgestrahlten Oberfläche bestimmt wird. Mit dem Verfahren können die durch das Kugelstrahlen bedingten Eindrücke exakt lokalisiert werden, so dass - unabhängig von subjektiven Einflüssen - eine genaue Erfassung des beim Kugelstrahlen erzielten Überdeckungsgrades möglich ist. Auf der Grundlage derart genauer Messergebnisse kann die Kugelstrahlverfestigung ohne Überstrahlung zeit- und kosteneffizient sowie in hoher Qualität durchgeführt werden.

In Ausgestaltung des erfindungsgemäßen Verfahrens wird die Referenzfläche visuell ausgewählt und weist einen kugelstrahlbedingten Überdeckungsgrad von maximal 50% auf.

In weiterer Ausgestaltung der Erfindung wird als digitale Aufnahmeeinheit ein konfokales Mikroskop oder ein Weißlichtinterferometer eingesetzt.

In weiterer Ausgestaltung der Erfindung ist der bearbeitungszustandsabhängige Software-Filter für verschiedene Bauteilwerkstoffe und/oder unterschiedliche Kugelstrahlmittel ausgelegt.

Ein Ausführungsbeispiel der Erfindung wird anhand der Zeichnung näher erläutert. Es zeigen:
- Fig. 1: eine stark vergrößerte Schnittansicht eines zu bewertenden Oberflächenbereichs (dreidimensionales Höhenbild) eines kugelgestrahlten Werkstücks;
- Fig. 2: den Verlauf des Oberflächenprofils in einem Ausschnitt B des kugelgestrahlten Oberflächenbereichs mit einer die Rauheiten überlagernden Ausgleichsebene;
- Fig. 3: eine Schnittdarstellung der Oberflächenstruktur im Ausschnitt B ohne Rauheiten (Höhendiagramm); und
- Fig. 4: eine Draufsicht nach Fig. 3.

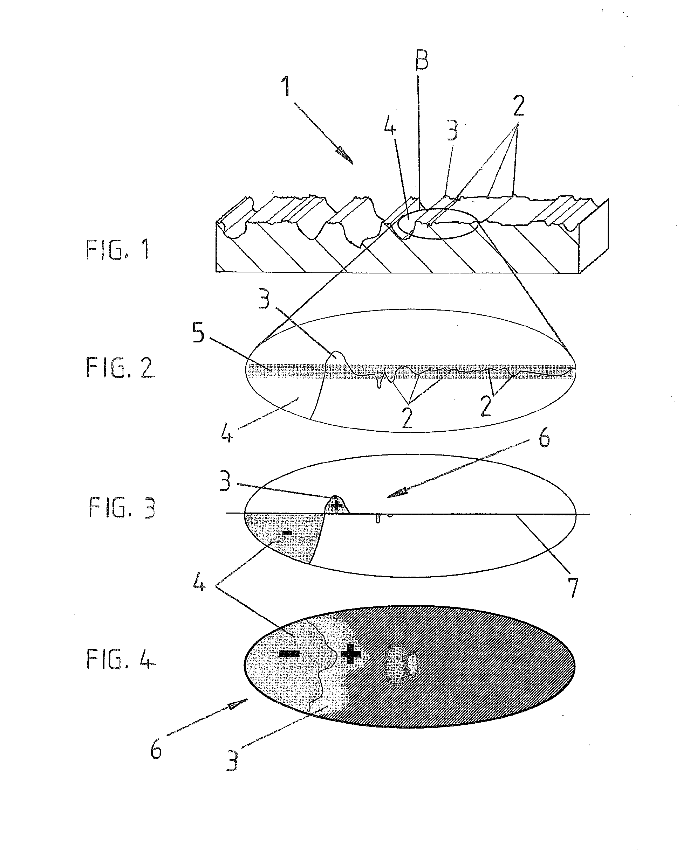

Zunächst wird eine bestimmte - kugelgestrahlte - Referenzfläche mit einer visuell festgestellten Überdeckung von maximal 50% ausgewählt und das Höhenprofil des betreffenden Oberflächenabschnitts digitalisiert, indem mit einer optischen digitalen Aufnahmeeinheit (3D-Scanner), zum Beispiel einem konfokalen Mikroskop oder einem Weißlichtinterferometer, die jeweilige Lage jedes Punktes der Oberflächentopographie des Oberflächenabschnitts festgestellt und anschließend mit einer Mess-und Auswertesoftware ein dreidimensionales Höhenbild 1 erstellt wird (Fig. 1).

In dem nachfolgenden Schritt werden mit einem Software-Filter (bearbeitungszustandsabhängiger Filter) auf den jeweiligen Bearbeitungszustand, wie Fräsen, Drehen, Ätzen, Schleifen oder dergleichen, zurückgehende fertigungsbedingte Rauheiten 2 (zum Beispiel Riefen) der Oberfläche, die kleiner als die durch das Kugelstrahlen bedingten Aufwürfe 3 (Erhöhungen) und Eindrücke 4 (Vertiefungen) sind, mittels mathematischer Methoden herausgefiltert. Der Software-Filter berücksichtigt auch unterschiedliche Bauteilwerkstoffe, wie beispielsweise Titan, Stahl oder Nickelbasis-Legierungen, sowie in Form, Größe und Werkstoff unterschiedliche Kugelstrahlmittel. Das Herausfiltern der fertigungsbedingten Rauheiten (Höhen und Tiefen) ist in Fig. 2 mit der darin dargestellten Ausgleichsebene 5 wiedergegeben.

Nach dem Herausfiltern der Rauheiten liegt das in Fig. 3 gezeigte - gefilterte - Höhendiagram 6 (ohne fertigungsbedingte Rauheiten) mit oberhalb und unterhalb einer ermittelten Nulllinie 7 liegenden, allein durch das Kugelstrahlen bedingten Aufwürfen 3 und Eindrücken 4 vor, das in Fig. 4 auch in einer Draufsicht dargestellt ist. Dadurch sind die Kugeleinschläge (Eindrücke 4 mit zugehörigen Aufwürfen 3) gegenüber anderen Rauheiten exakt lokalisiert.

In dem darauffolgenden Schritt wird die Größe der unterhalb der Nullebene liegenden Flächen der Eindrücke 4 berechnet und ins Verhältnis mit der Gesamtfläche gesetzt und damit der kugelbestrahlte Bereich bzw. der beim Kugelstrahlen erzielte Überdeckungsgrad (Grad der Flächenabdeckung durch das Kugelstrahlen) exakt ermittelt. Auf der Grundlage derart exakter Messergebnisse kann das Kugelstrahlen so gesteuert werden, dass - ohne Überstrahlung - eine vollständige Überdeckung der Werkstückoberfläche und somit eine optimale Oberflächenverfestigung der betreffenden Bauteile erreicht wird. Das Kugelstrahlen kann zudem zeit- und kosteneffizient und in hoher Qualität durchgeführt werden.

### Bezugszeichenliste

- 1: dreidimensionales Höhenbild
- 2: fertigungsbedingte Rauheiten
- 3: kugelstrahlbedingter Aufwurf
- 4: kugelstrahlbedingter Eindruck
- 5: Ausgleichsebene
- 6: Höhendiagramm aus Aufwürfen und Eindrücken
- 7: Nulllinie

## Patentansprüche

1. Verfahren zum Erfassen der Flächenbedeckung beim Kugelstrahlen zur Verfestigung der Oberfläche von Bauteilen, insbesondere Bliskschaufeln, **dadurch gekennzeichnet, dass** die Oberflächentopographie einer bestimmte Referenzfläche eines kugelbestrahlten Bauteils mit einer optischen digitalen Aufnahmeeinheit digitalisiert wird und mit Hilfe einer Mess- und Auswerte-Software ein dreidimensionales Höhenprofil (1) erstellt wird, das kugelstrahlbedingte Eindrücke (4) und Aufwürfe (3) sowie durch die Herstellung des Bauteils bedingte Rauheiten (2), die kleiner als die Aufwürfe und Eindrücke sind, umfasst; und die fertigungsbedingten Rauheiten anschließend durch einen Software-Filter mittels mathematischer Methoden aus dem Höhenbild (1) herausgefiltert werden sowie ein Höhendiagramm (6) mit den unterhalb einer Nulllinie (7) liegenden Eindrücken (4) ermittelt wird, deren Größe im Verhältnis zu der Gesamtfläche im Höhendiagramm errechnet und daraus der Überdeckungsgrad der gesamten kugelgestrahlten Oberfläche bestimmt wird.

2. Verfahren nach Anspruch 1, **dadurch gekennzeichnet, dass** die Referenzfläche einen kugelstrahlbedingten Überdeckungsgrad von maximal 50% aufweist und visuell ausgewählt wird.

3. Verfahren nach Anspruch 1, **dadurch gekennzeichnet, dass** als digitale Aufnahmeeinheit ein konfokales Mikroskop oder ein Weißlichtinterferometer eingesetzt wird.

4. Verfahren nach Anspruch 1, **dadurch gekennzeichnet, dass** der bearbeitungszustandsabhängige Software-Filter für verschiedene Bauteilwerkstoffe und/oder verschiedene Bauteilzustände und/oder unterschiedliche Kugelstrahlmittel ausgelegt ist.
